# EUROPÄISCHE PATENTANMELDUNG

(11) **EP 2 154 217 A2**
(43) Veröffentlichungstag der Anmeldung: **17.02.2010**
(21) Anmeldenummer: 09165493.9
(22) Anmeldetag: 15.07.2009
(51) Int. Cl.: C09J 7/02

(54) **Selbstklebender Gegenstand**

(30) Priorität: 29.07.2008 DE 102008035382
(71) Anmelder: TESA SE, 20253 Hamburg (DE)
(72) Erfinder: Kleinhoff, Klaus, 31552, Rodenberg (DE)

(57) **Zusammenfassung**

Die Erfindung betrifft einen selbstklebenden Gegenstand. Dabei ist vorgesehen, dass er zumindest eine Klebefläche aufweist, die eine aushärtbare Klebmasse (3), die unter Aufnahme oder Abgabe eines Stoffes aushärtet, umfasst, wobei an dem Gegenstand (1) Mittel (2) zur Steuerung entweder der Aufnahme des Stoffes aus der Umgebung in die Klebmasse oder der Abgabe des Stoffes aus der Klebmasse in die Umgebung ausgebildet sind.

## Beschreibung

Die Erfindung betrifft einen selbstklebenden Gegenstand, Verfahren zu dessen Herstellung sowie Verwendungen des selbstklebenden Gegenstandes.

Die Verwendung selbstklebender Gegenstände ist sowohl im industriellen als auch im privaten Bereich weit verbreitet. Dies ist auf die zahlreichen Vorteile zurückzuführen, die selbstklebende Gegenstände wie beispielsweise doppelseitige Klebebänder bieten. Ein solches Klebeband lässt sich unter anderem wesentlich schneller an einer vorgesehenen Klebestelle auftragen als ein pastöser Kleber. Außerdem muss sich der Anwender nicht mehr um die Dickendosierung des Klebers und auch nicht um die Herstellung des richtigen Umrisses oder gar die spätere Entfernung von Klebüberschüssen an den Rändern kümmern. Ferner erhält er ohne eigene Sorgfalt eine in sehr engen Toleranzgrenzen vom Klebebandhersteller garantierbare Beabstandung zwischen den Klebeflächen von A und B.

Diesen vorteilhaften Eigenschaften steht aber der Nachteil gegenüber, dass gerade die - zum Aufbringungszeitpunkt so angenehme - Selbstklebeeigenschaft die Anwendung an auf Dauer hochbelasteten Teilen verhindert. Dieser Nachteil von Selbstklebemassen kommt in deren englischsprachiger Bezeichnung "permanent tacky adhesive" trefflich zum Ausdruck. Selbstklebemassen fließen unter Last, wenn auch nur sehr langsam. Dies schränkt die Anwendbarkeit von bekannten selbstklebenden Gegenständen jedoch erheblich ein. Würde beispielsweise eine Automobilkarosserie aus Aluminium an den Fügestellen ausschließlich über Selbstklebemassen gehalten, so würde die Karosserie bereits nach wenigen Jahren nach unten durchhängen.

Aufgabe der Erfindung ist es, die Nachteile nach dem Stand der Technik zu beseitigen. Es soll insbesondere ein selbstklebender Gegenstand angegeben werden, der die Vorteile bekannter selbstklebender Gegenstände, insbesondere deren bequeme Handhabbarkeit aufweist, jedoch eine verbesserte Dauerfestigkeit besitzt. Ferner sollen Verwendungen der erfindungsgemäßen selbstklebenden Gegenstände und Verfahren zu deren Herstellung angegeben werden.

Diese Aufgabe wird durch die Merkmale der Ansprüche 1, 23 und 25 gelöst. Zweckmäßige Ausgestaltungen der Erfindungen ergeben sich aus den Merkmalen der Ansprüche 2 bis 22, 24 sowie 26 bis 28.

Nach Maßgabe der Erfindung ist ein selbstklebender Gegenstand vorgesehen, der zumindest eine Klebefläche aufweist, die eine aushärtbare Klebmasse, die unter Aufnahme oder Abgabe eines Stoffes aushärtet, umfasst, wobei an dem Gegenstand Mittel zur Steuerung entweder der Aufnahme des Stoffes aus der Umgebung in die Klebmasse oder der Abgabe des Stoffes aus der Klebmasse in die Umgebung ausgebildet sind.

Die Klebefläche kann neben der aushärtbaren Klebmasse Selbstklebemasse umfassen.

Die Mittel zur Steuerung entweder der Aufnahme des Stoffes aus der Umgebung in die Klebmasse oder der Abgabe des Stoffes aus der Klebmasse in die Umgebung werden nachfolgend auch als Steuerungsmittel bezeichnet.

Die Steuerungsmittel, die an dem selbstklebenden Gegenstand ausgebildet sind, verhindern oder verzögern die Aushärtung der aushärtbaren Klebmasse bis zu dem Zeitpunkt, in der der Anwender die Aushärtung der aushärtbaren Klebmasse wünscht. Die erfindungsgemäß vorgesehene aushärtbare Klebmasse sorgt für eine hohe Dauerfestigkeit der mit Hilfe des erfindungsgemäßen selbstklebenden Gegenstandes realisierten Klebeverbindung. Um ein vorzeitiges Aushärten der aushärtbaren Klebmasse zu verhindern, sind die Steuerungsmittel an dem Gegenstand ausgebildet, so dass die Klebmasse zur Umgebung hin abgegrenzt ist.

Mittels der Steuerungsmittel wird somit erreicht, dass der Stoff, der zum Aushärten der aushärtbaren Klebmasse von dieser aufgenommen oder abgegeben werden muss, nicht aufgenommen oder abgegeben werden kann. Anders gesagt, verhindern die Steuerungsmittel im Falle einer aushärtbaren Klebmasse, die zur Aushärtung die Aufnahme eines Stoffes aus der Umgebung erfordert, dass dieser Stoff zu der aushärtbaren Klebmasse gelangt, solange die Aushärtung der aushärtbaren Klebmasse von dem Anwender nicht gewünscht wird. Unter dem Ausdruck "Verhindern" wird hier auch das "Verzögern" der Aufnahme des Stoffes durch die aushärtbare Klebmasse verstanden. Im Falle einer aushärtbaren Klebmasse, die zur Aushärtung die Abgabe eines Stoffes an die Umgebung erfordert, verhindern die Steuerungsmittel, dass der Stoff aus der aushärtbaren Klebmasse austreten kann, solange die Aushärtung der aushärtbaren Klebmasse von dem Anwender nicht gewünscht wird. Unter dem Ausdruck "Verhindern" wird hier auch das "Verzögern" der Abgabe des Stoffes durch die aushärtbare Klebmasse verstanden.

Bevorzugt ist der selbstklebende Gegenstand ein Klebeband oder ein Etikett.

In einer Ausführungsform der Erfindung sind die Steuerungsmittel Dichtungsprofile, die an die aushärtbare Klebmasse angrenzen. Diese Dichtungsprofile sind vorteilhafterweise am Rand des Gegenstandes ausgebildet, wobei die aushärtbare Klebmasse zwischen gegenüberliegenden Dichtungsprofilen angeordnet ist. Alternativ oder zusätzlich können weitere Dichtungsprofile vorgesehen sein, ohne dass es erforderlich ist, dass diese sich am Rand des selbstklebenden Gegenstandes befinden.

Es kann vorteilhaft sein, dass die aushärtbare Klebmasse vor ihrer Aushärtung eine Dicke aufweist, die geringer als die Höhe der Steuerungsmittel ist, während die aushärtbare Klebmasse nach der Aushärtung eine Dicke aufweist, die der Höhe der Steuerungsmittel entspricht oder diese übersteigt.

Die Aushärtung der aushärtbaren Klebmasse wird erfindungsgemäß erreicht, indem im Falle einer aushärtbaren Klebmasse, zu deren Aushärtung die Klebmasse einen Stoff aufnehmen muss, dieser Stoff von der aushärtbaren Klebmasse aus der Umgebung aufgenommen wird. Im Falle einer aushärtbaren Klebmasse, zu deren Aushärtung die Klebmasse einen Stoff abgegeben muss, wird die Aushärtung der aushärtbaren Klebmasse erreicht, indem dieser Stoff von der aushärtbaren Klebmasse in der Umgebung abgegeben wird. In beiden Fällen kann die Aushärtung unter Energiezufuhr oder Energieabgabe erfolgen.

Ein besonderes bevorzugtes Beispiel hierfür sind auf Polyurethan basierende Klebmassen, die durch Aufnahme von Luftfeuchtigkeit aushärten. Überdies bieten auf Polyurethan basierende Klebmassen den Vorteil, dass sie sich während der Aushärtung ausdehnen.

Gemäß einer bevorzugten Ausführungsform der Erfindung ist der Stoff, der von der Klebemasse aufgenommen werden muss, in Mikrokapseln enthalten, die in der Klebemasse verteilt sind. Bevorzugt liegt eine homogene Verteilung der Mikrokapseln vor, so dass auch die Aushärtung sehr gleichmäßig erfolgen kann und der Stoff auch die gesamte Klebemasse durchdringen kann.

Die Hülle der Mikrokapseln kann beispielsweise durch Ultraschall oder eine Temperatureinwirkung, bei der sich der Inhalt der Mikrokapseln ausdehnt und/oder bei der der Inhalt der Mikrokapseln verdampft, zerstört werden. Je nach Anwendungsfall ist es möglich, dass die Mikrokapseln auch mechanisch, zum Beispiel durch das Einwirken von Druck, zum Aufplatzen gebracht werden.

Die Mikrokapseln können eine Hülle aus Glas oder eine elastische Hülle aus bevorzugt einem thermoplastischen Polymer aufweisen. Als Hüllenmaterial finden insbesondere Polyacrylnitril, PVDC, PVC oder Polyacrylate Verwendung.

Durch ein Einwirken auf die Mikrokapseln, beispielsweise durch eine Wärmeeinwirkung erweicht einerseits die äußere Polymerhülle. Gleichzeitig geht das in der Hülle befindliche Mittel in seinen gasförmigen Zustand über. Dabei dehnen sich die Mikrokapseln irreversibel aus, bis sie aufplatzen und den Inhalt freigeben.

Gemäß dem genannten Beispiel der auf Polyurethan basierenden Klebmassen würden die Mikrokapseln das zur Aushärtung erforderliche Wasser enthalten.

In einer bevorzugten Ausführungsform der Erfindung umfasst der selbstklebende Gegenstand einen Träger, vorzugsweise einen bandförmigen Träger, auf dem die Steuerungsmittel ausgebildet sind. Im Falle eines bandförmigen Trägers, wie er beispielsweise für die Herstellung doppelseitiger Klebebänder verwendet wird, sind die Steuerungsmittel in Form von Dichtungsprofilen auf einer Oberseite des Trägers an dessen beiden Längsrändern ausgebildet. Zwischen den Dichtungsprofilen ist die aushärtbare Klebmasse, beispielsweise schichtförmig auf die Oberseite des Trägers aufgebracht.

Die Dichtungsprofile grenzen Schmalseiten der aushärtbaren Klebmasse in Längsrichtung gegen die Umgebung ab, wodurch eine Randabdichtung der aushärtbaren Klebmasse erreicht wird. Die Unterseite und die Oberseite der aushärtbaren Klebmasse werden durch den Träger von der Umgebung abgegrenzt, wenn der selbstklebende Gegenstand als Rolle bereitgestellt wird. Eine Abgrenzung der aushärtbaren Klebmasse gegen die Umgebung an deren Schmalseiten in Querrichtung ist nicht erforderlich, da - in Abhängigkeit von der verstrichenen Zeit seit der letzen Nutzung des selbstklebenden Gegenstandes, der Temperatur und der aushärtbaren Klebmasse - die Abschnitte des Klebebandes, die bereits ausgehärtet sind, abgeschnitten und verworfen werden können. Die Länge dieser Abschnitte kann beispielsweise 2 bis 50 mm betragen.

Die an den Längsrändern des bandförmigen Trägers vorgesehenen Dichtungsprofile können auf den Träger aufgebracht werden oder bereits bei der Herstellung des Trägers in diesem einstückig ausgeformt werden. Ersteres bietet sich bei der Kleinserienherstellung von Klebebändern an. Letzteres ist insbesondere bei der Großserienfertigung von Klebebändern vorteilhaft. Dabei kann ein Meisterträger vorgesehen sein, in dem gleichmäßig voneinander beabstandete Dichtungsprofile in Form von Längsrippen vorgesehen sind. Am Ende des Bandherstellungsprozesses kann der Meisterträger in der Mitte einer oder mehrerer oder jeder solcher Längsrippen auf die gewünschte Rollenbereite zugeschnitten werden.

Bei der Herstellung von Klebebändern wird eine besonders gute Randabdichtung der aushärtbaren Klebmasse erreicht, wenn die Pressung, die beim Aufwickeln des Klebebandes, das die Dichtungsprofile aufweist und mit der aushärtbaren Klebmasse beschichtet ist, entsteht, an den Bandrändern höher als die in der Bindemitte ist. Vorzugsweise wird Wickeldruck nur an den Rändern des Klebebandes aufgebaut. Dazu wird die aushärtbaren Klebmasse mit einer Schichtdicke aufgetragen, die geringer als die Höhe der Dichtungsprofile ist.

Mit dem Abwickeln von Abschnitten des Klebebandes von der Rolle wird die aushärtbare Klebmasse der Umgebung ausgesetzt und beginnt auszuhärten. Um eine Behinderung des Aushärteprozesses durch die randseitigen Dichtungsprofile zu verhindern, kann deren Entfernung wünschenswert sein. Beispielsweise können die randseitigen Dichtungsprofile von dem Klebeband abgetrennt werden, indem diese durch eine mundstückartige Öffnung einer Vorrichtung, beispielsweise eines Klebebandspenders, gezogen werden, wobei an der Öffnung zwei Messer vorgesehen sind, die beim Ziehen des Klebebandes die Dichtungsprofile abschneiden. Auf diese Weise werden die Dichtungsprofile von der erstellten Klebfuge ferngehalten. Statt die Dichtungsprofile zu entfernen, kann jedoch eine aushärtbare Klebmasse eingesetzt werden, die nach der Exposition an ihrer Umgebung einen soweit gehenden Volumenzuwachs erfährt, dass am Ende des Aushärtungsprozesses die Klebmassenschicht eine Dicke aufweist, die größer als die Höhe der Dichtungsprofile ist. Ein solcher Volumenzuwachs kann beispielsweise erreicht werden, indem eine aushärtbare Klebmasse eingesetzt wird, die nach dem Kontakt mit der Umwelt aufschäumt oder sich durch die Stoffaufnahme ausdehnt. Ein Beispiel für eine aushärtbare Klebmasse, die nach Kontakt mit Umgebung aufschäumt, ist ...; ein Beispiel für eine aushärtbare Klebmasse, die sich durch die Stoffaufnahme ausdehnt, ist eine auf Polyurethan basierende Klebmasse, die durch die Aufnahme von Luftfeuchtigkeit aus der Umgebung aushärtet.

Um die Aushärtung der aushärtbaren Klebmasse zusätzlich zu verhindern oder zumindest weitgehend zu verzögern, können die Steuerungsmittel Bereiche aus einem Material aufweisen, das den Stoff, dessen Aufnahme aus der Umgebung zur Aushärtung der aushärtbaren Klebmasse erforderlich ist, aufnehmen kann, so dass der Kontakt zwischen dem Stoff und der aushärtbaren Klebmasse bis zum vorgegebenen Beginn des Aushärtungsprozesses verhindert wird. Dies ist besonders während der Lagerung des selbstklebenden Gegenstandes vorteilhaft. Ist der Stoff, den die aushärtbare Klebmasse aufnehmen muss, Wasser wie das bei Polyurethan-Klebmassen der Fall ist, so ist das Material ein hydrophiles Material. Das Volumen des hydrophilen Materials ist im Zusammenspiel mit dem erreichten Dichtigkeitsgrad der Dichtungsprofile so abgestimmt, dass der Wassereintrag an die aushärtbare Klebmasse hinreichend lange unterbunden oder zumindest verzögert wird.

Alternativ können, um die Aushärtung der aushärtbaren Klebmasse zusätzlich zu verhindern oder zumindest weitgehend zu verzögern, die Steuerungsmittel Bereiche aus einem Material aufweisen, das den Stoff, dessen Abgabe an die Umgebung zur Aushärtung der aushärtbaren Klebmasse erforderlich ist, abgeben kann, so dass die Konzentration des Stoffes in der aushärtbaren Klebmasse, die notwendig ist, um deren Aushärtung zu verhindern, bis zum vorgegebenen Beginn des Aushärtungsprozesses aufrechterhalten wird. Dies ist besonders während der Lagerung des selbstklebenden Gegenstandes vorteilhaft.

In beiden Fällen können die Bereiche innerhalb der Dichtungsprofile oder an deren der Klebmasse zugewandten Rändern vorgesehen sein. Im Falle von Klebebändern können die Bereiche Längsspuren des Materials sein, die auf die Dichtungsprofile aufgetragen sind. Bevorzugt sind die Materialien Selbstklebemassen.

Ist der selbstklebende Gegenstand ein doppelseitiges Klebeband, so können die beiden Oberseiten des bandförmigen Trägers gleich oder unterschiedlich ausgerüstet sein. Beispielsweise kann der selbstklebende Gegenstand ein doppelseitiges Klebeband mit einem bandförmigen Träger sein, wobei
- auf einer der beiden Oberseiten des bandförmigen Trägers Dichtungsprofile an den Längsrändern des Trägers ausgebildet sind und sich zwischen den Dichtungsprofilen die aushärtbare Klebmasse befindet; und
- auf der anderen Oberseite des bandförmigen Trägers eine Selbstklebmasse aufgetragen ist.

Alternativ kann der selbstklebende Gegenstand ein doppelseitiges Klebeband mit einem bandförmigen Träger sein, wobei
- auf einer der beiden Oberseiten des bandförmigen Trägers Dichtungsprofile an den Längsrändern des Trägers ausgebildet sind und sich zwischen den Dichtungsprofilen aushärtbare Klebmasse befindet; und
- auf der anderen Oberseite des bandförmigen Trägers ebenfalls Dichtungsprofile an den Längsrändern des Trägers ausgebildet sind und sich zwischen den Dichtungsprofilen aushärtbare Klebmasse befindet.

Ist der selbstklebende Gegenstand ein Etikett, so ist auf einer der Oberseiten des Etikettes bevorzugt ein randseitiges Steuerungsmittel ausgebildet, das um den gesamten Rand des Etikettes geführt ist. Die auf diese Oberseite des Etikettes aufgebrachte Schicht aus der aushärtbaren Klebmasse ist dann zwischen dem Steuerungsmittel angeordnet und an ihren Schmalseiten von den Steuerungsmitteln, die beispielsweise als Dichtungsprofile ausgebildet sind, zur Umgebung hin abgedichtet.

Die erfindungsgemäßen Etiketten sind insbesondere für Identifikations- und/oder Sicherheitsanwendungen geeignet, beispielsweise für sicherheitsrelevante Bauteile im Fahrzeug- und Flugzeugbau, an deren Oberfläche sich die Einprägung einer Identifikationsprägung wegen der damit verbundenen Kerbwirkung im späteren Betrieb und demzufolge schnellerer Ermüdung verbietet, andererseits aber die Verwendung nicht-originaler Ersatzteile besonders hohe Gefahren birgt. Bei solchen Anwendungen sind bisherige selbstklebende Etiketten von nur begrenztem Wert, weil sie sich - bei entsprechendem Aufwand und einer gewissen Sorgfalt - nahezu rückstandsfrei ablösen und durch ein anderes ersetzen lassen. Die erfindungsgemäßen Etiketten lassen sich zwar genauso bequem aufbringen, aber schon wenige Stunden nach der Aufbringung nicht mehr zerstörungsfrei entfernen.

Neben solchen einseitig klebenden Etiketten können aber auch beidseitig klebende Etiketten vorgesehen sein, deren andere Oberseite mit einer Selbstklebemasse und/oder mit einer aushärtbaren Klebmasse beschicht ist, wobei im Falle einer aushärtbaren Klebmasse wiederum Dichtungsprofile auf der zweiten Oberseite ausgebildet sind. Beidseitig klebende Etiketten können vorteilhaft - vorzugsweise mit einem genau zur Anwendungsstelle passend gestanzten Umriss - zur Verklebung von Aluminiumteilen in der Flugzeug-und Fahrzeugherstellung eingesetzt werden. Ferner können mit Hilfe dieser Etiketten Carbon-Festigkeitsträger - beispielsweise Balken oder Holme - in Baugruppen aus anderen Werkstoffen eingefügt werden.

Ein weiteres Anwendungsgebiet der erfindungsgemäßen selbstklebenden Gegenstände kann die Verklebung von Glasscheiben im Karosserie- und Flugzeugbau sein.

Als Träger, die bei dem selbstklebenden Gegenstand vorgesehen sind, können Träger verwendet werden, die herkömmlich zur Herstellung von Klebebändern und Etiketten verwendet werden. Beispielsweise können als Träger Folien (Polyester, PET, PE, PP, BOPP, PVC), Vliese, Schäume, Gewebe und Gewebefolien verwendet werden. Diese Aufzählung soll nicht abschließend sein.

In einer Ausführungsform bestehen der Träger und die Steuerungsmittel aus demselben Material.

Die erfindungsgemäßen selbstklebenden Gegenstände können somit im Modellbau, beispielsweise Modellflugzeugbau, -schiffbau und -autobau, im Flugzeugbau, Autobau, zur Befestigung von Blendleisten im Türen- und Fensterbau, zum Einbau von Türen und Fenstern, zur Beschichtung der Stirnflächen von Muttern als Sicherung und als Sicherheitsetiketten verwendet werden.

Die erfindungsgemäßen selbstklebenden Gegenstände können beispielsweise mittels eines Verfahrens hergestellt werden, das
(a) das Bereitstellen eines Trägers;
(b) das Ausbilden der Steuerungsmittel an zumindest einer Seite des Trägers; und
(c) das Aufbringen der aushärtbaren Klebmasse auf den Träger
umfasst.

Im Falle eines Klebebandes wird ein bandförmiger Träger bereitgestellt, wobei die Steuerungsmittel als Dichtungsprofile an den Längsrändern des Trägers ausgebildet werden und die aushärtbare Klebmasse zwischen den Steuerungsmitteln auf den Träger aufgebracht wird.

Auf die Steuerungsmittel kann das Material aufgebracht werden, das den Stoff, dessen Aufnahme aus der Umgebung zur Aushärtung der aushärtbaren Klebmasse erforderlich ist, aufnehmen kann, so dass der Kontakt zwischen dem Stoff und der aushärtbaren Klebmasse bis zum vorgegebenen Beginn des Aushärtungsprozesses verhindert wird. Alternativ kann auf die Steuerungsmittel das Material aufgebracht werden, das den Stoff, dessen Abgabe an die Umgebung zur Aushärtung der aushärtbaren Klebmasse erforderlich ist, an die aushärtbare Klebstoffmasse abgibt, so dass die Konzentration des Stoffes in der aushärtbaren Klebmasse, die notwendig ist, um deren Aushärtung zu verhindern, bis zum vorgegebenen Beginn des Aushärtungsprozesses aufrechterhalten wird.

Die Erfindung wird nachstehend anhand von Beispielen mit Bezug auf die beigefügten Figuren ausführlicher erläutert. Dabei zeigen
- Fig. 1: eine Draufsicht auf einen Abschnitt einer Ausführungsform des erfindungs- gemäßen Klebebandes;
- Fig. 2: eine Schnittdarstellung der in Fig. 1 gezeigten Ausführungsform des erfin- dungsgemäßen Klebebandes entlang Linie A-A in Fig. 1;
- Fig. 3: eine Schnittdarstellung einer zweiten Ausführungsform des erfindungsgemä- ßen Klebebandes;
- Fig. 4a: eine alternative Schnittdarstellung einer dritten Ausführungsform des erfin- dungsgemäßen Klebebandes vor dem Aushärten der aushärtbaren Klebmas- se;
- Fig. 4b: eine Schnittdarstellung der in Fig. 4 a gezeigten dritten Ausführungsform des erfindungsgemäßen Klebebandes nach dem Aushärten der aushärtbaren Klebmasse;
- Fig. 4c: eine Schnittdarstellung der in Fig. 4 a gezeigten dritten Ausführungsform des erfindungsgemäßen Klebebandes nach dem Entfernen der Dichtungsprofile;
- Fig. 5: eine Schnittdarstellung einer vierten Ausführungsform des erfindungsgemä- ßen Klebebandes;
- Fig. 6: eine Schnittdarstellung einer fünften Ausführungsform des erfindungsgemä- ßen Klebebandes; und
- Fig. 7: eine Draufsicht auf ein erfindungsgemäßes Etikett.

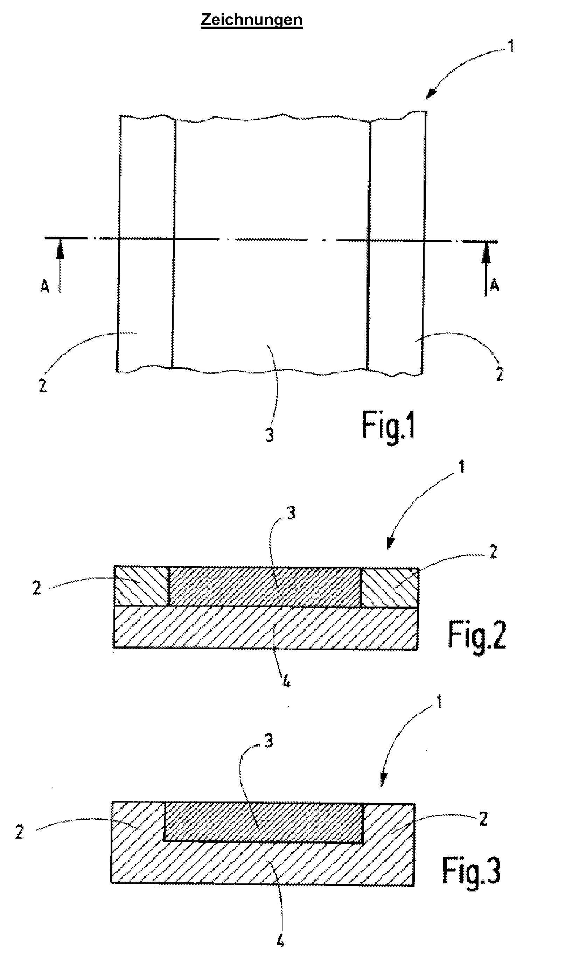

Nach den Figuren 1 und 2 besteht das erfindungsgemäße Klebeband 1 aus einem schichtförmigen Träger 4, der auf seiner Oberseite jeweils an seinem Längsrand Dichtungsprofile 2 aufweist. Zwischen den Dichtungsprofilen 2 ist die aushärtbare Klebmasse 3 auf diese Oberseite des Trägers 4 aufgebracht.

Fig. 2 lässt erkennen, dass bei dieser ersten Ausführungsform des erfindungsgemäßen Klebebandes die Dichtungsprofile 2 auf den Träger 4 nachträglich aufgebracht worden sind. Im Gegensatz dazu sind bei der in Fig. 3 gezeigten zweiten Ausführungsform der Träger 4 und die Dichtungsprofile 2 einstückig ausgeformt.

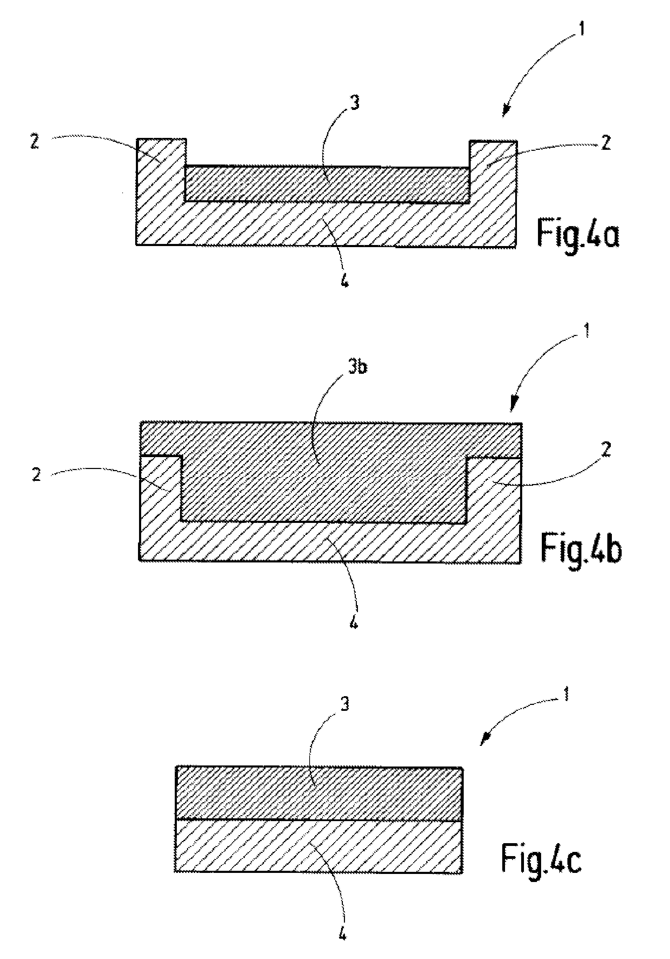

In Figuren 4a und 4b ist eine dritte Ausführungsform eines erfindungsgemäßen Klebebandes gezeigt. Es ist in Fig. 4a zu erkennen, dass die Stärke der Schicht aus der aushärtbaren Klebmasse 3 geringer als die Höhe der Dichtungsprofile 2 ist. Dies ist der Zustand vor dem Aushärten. Der Zustand nach dem Aushärten ist in Fig. 4b gezeigt. Während des Aushärtens hat sich das Volumen der Klebmasse erhöht, so dass die ausgehärtete Klebmasse 3b die Oberseiten der Dichtungsprofile 2 bedeckt. Auf diese Weise wird verhindert, dass nicht-klebende Abschnitte des Klebebandes 1 in Kontakt mit der Klebefläche eines Objektes, auf das das Klebeband 1 aufgetragen werden soll, gelangen. Alternativ können - wie in Fig. 4c gezeigt - die Dichtungsprofile 2 vor dem Aushärten abgetrennt werden.

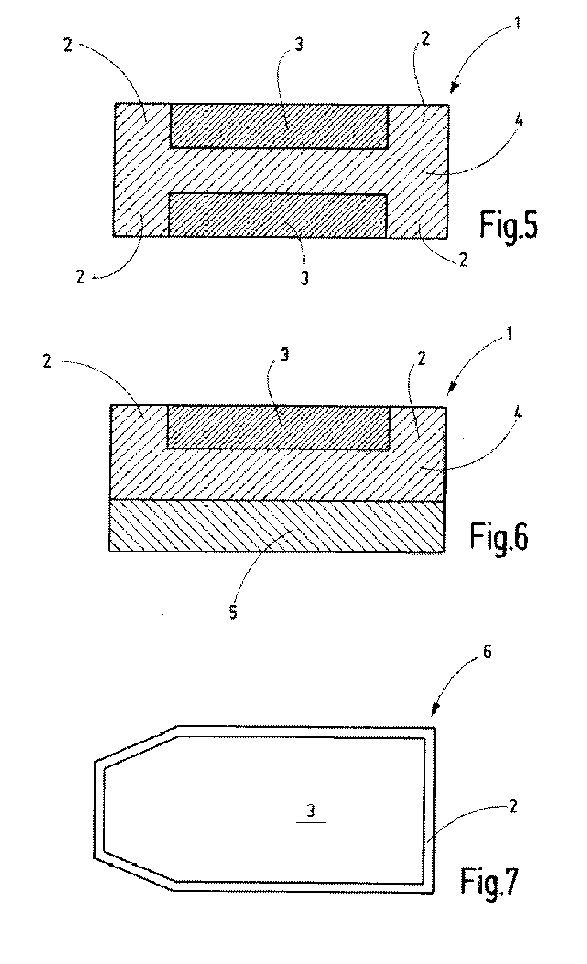

Die in den Figuren 5 und 6 gezeigten Ausführungsformen sind doppelseitige Klebebänder. Bei der in Fig. 5 gezeigten vierten Ausführungsform ist ebenso wie die erste Oberseite auch die zweite Oberseite des Trägers 4 mit randseitigen Dichtungsprofilen 2 versehen, zwischen denen die aushärtbare Klebmasse aufgetragen ist. Davon abweichend ist in Fig. 6 ein doppelseitiges Klebeband gezeigt, dass auf seiner zweiten Oberseite eine Schicht aus einer Selbstklebemasse 5 aufweist, während auf seiner ersten Oberseite randseitige Dichtungsprofile 2 ausgebildet sind, zwischen denen die aushärtbare Klebmasse aufgetragen ist.

Fig. 7 zeigt eine Ausführungsform eines erfindungsgemäßen Etikettes 6. Das Etikett weist am Rand seiner ersten Oberseite ein durchgehendes Dichtungsprofil 2 auf. Auf diese Oberseite ist ferner die aushärtbare Klebmasse 3 aufgetragen. Auf die Oberfläche der aushärtbaren Klebmasse 3, die dem Träger abgewandt ist, kann ein Trennpapier aufgebracht sein, dass die Abgabe oder Aufnahme des Stoffes, der zum Aushärten der aushärtbaren Klebmasse 3 abgegeben oder aufgenommen werden muss, verhindert. Das Trennpapier wird entfernt, wenn das Etikett angewendet werden soll, wodurch der Aushärtprozess ausgelöst wird.

### Bezugszeichenliste

- 1: Klebeband
- 2: Dichtungsprofil
- 3: aushärtbare Klebmasse
- 3b: ausgehärtete Klebmasse
- 4: Träger
- 5: Selbstklebemasse
- 6: Etikett

## Patentansprüche

1. Selbstklebender Gegenstand mit zumindest einer Klebefläche, die eine aushärtbare Klebmasse (3), die unter Aufnahme oder Abgabe eines Stoffes aushärtet, umfasst, wobei an dem Gegenstand (1) Mittel (2) zur Steuerung entweder der Aufnahme des Stoffes aus der Umgebung in die Klebmasse (3) oder der Abgabe des Stoffes aus der Klebmasse (3) in die Umgebung ausgebildet sind.

2. Selbstklebender Gegenstand nach Anspruch 1, **dadurch gekennzeichnet, dass** die Mittel (2) zur Steuerung der Aufnahme oder der Abgabe des Stoffes (Steuerungsmittel) Dichtungsprofile (2) sind, die an die aushärtbare Klebmasse (3) angrenzen.

3. Selbstklebender Gegenstand nach Anspruch 1 oder Anspruch 2, **dadurch gekennzeichnet, dass** die Steuerungsmittel (2) die Aushärtung der aushärtbaren Klebmasse (3) bis zum vorgegebenen Beginn des Aushärtungsprozesses verhindern.

4. Selbstklebender Gegenstand nach einem der vorstehenden Ansprüche, **dadurch gekennzeichnet, dass** die Steuerungsmittel (2) am Rand des Gegenstandes (1) ausgebildet sind und die aushärtbare Klebmasse (3) zwischen gegenüberliegenden Steuerungsmitteln (2) angeordnet ist.

5. Selbstklebender Gegenstand nach einem der vorstehenden Ansprüche, **dadurch gekennzeichnet, dass** die aushärtbare Klebmasse (3) vor der Aushärtung eine Dicke aufweist, die geringer als die Höhe der Steuerungsmittel (2) ist.

6. Selbstklebender Gegenstand nach einem der vorstehenden Ansprüche, **dadurch gekennzeichnet, dass** die aushärtbare Klebmasse (3) nach der Aushärtung eine Dicke aufweist, die die Höhe der Steuerungsmittel (2) entspricht oder diese übersteigt.

7. Selbstklebender Gegenstand nach einem der vorstehenden Ansprüche**, dadurch gekennzeichnet, dass** er einen Träger (4) umfasst, der zumindest einen Rand aufweist, an dem ein Steuerungsmittel (2) ausgebildet ist.

8. Selbstklebender Gegenstand nach Anspruch 7, **dadurch gekennzeichnet, dass** der Träger (4) ein bandförmiger Träger ist, an dessen Längsrändern jeweils ein Steuerungsmittel (2) ausgebildet ist.

9. Selbstklebender Gegenstand nach Anspruch 7 oder Anspruch 8, **dadurch gekennzeichnet, dass** die Steuerungsmittel (2) als Dichtprofile auf eine Seite des bandförmigen Trägers (4) aufgebracht sind.

10. Selbstklebender Gegenstand nach einem der Ansprüche 7 bis 9, **dadurch gekennzeichnet, dass** die Steuerungsmittel (2) in dem Träger (4) ausgeformt sind.

11. Selbstklebender Gegenstand nach einem der vorstehenden Ansprüche, **dadurch gekennzeichnet, dass** die aushärtbare Klebmasse (3) eine Polyurethan-Klebmasse ist.

12. Selbstklebender Gegenstand nach einem der vorstehenden Ansprüche**, dadurch gekennzeichnet, dass** die aushärtbare Klebmasse (3) unter Volumenzunahme aushärtet.

13. Selbstklebender Gegenstand nach einem der vorstehenden Ansprüche, **dadurch gekennzeichnet, dass** die Steuerungsmittel (2) Bereiche aus einem Material aufweisen, das den Stoff, dessen Aufnahme aus der Umgebung zur Aushärtung der aushärtbaren Klebmasse (3) erforderlich ist, aufnehmen kann, so dass der Kontakt zwischen dem Stoff und der aushärtbaren Klebmasse (3) bis zum vorgegebenen Beginn des Aushärtungsprozesses verhindert wird.

14. Selbstklebender Gegenstand nach einem der vorstehenden Ansprüche, **dadurch gekennzeichnet, dass** die Steuerungsmittel (2) Bereiche aus einem Material aufweisen, das den Stoff, dessen Abgabe an die Umgebung zur Aushärtung der aushärtbaren Klebmasse erforderlich ist, an die aushärtbare Klebstoffmasse (3) abgibt, so dass die Konzentration des Stoffes in der aushärtbaren Klebmasse (3), die notwendig ist, um deren Aushärtung zu verhindern, bis zum vorgegebenen Beginn des Aushärtungsprozesses aufrechterhalten wird.

15. Selbstklebender Gegenstand nach Anspruch 13 oder Anspruch 14, **dadurch gekennzeichnet, dass** das Material auf die Steuerungsmittel (2) aufgetragen ist.

16. Selbstklebender Gegenstand nach einem der vorstehenden Ansprüche, **dadurch gekennzeichnet, dass** die Steuerungsmittel (2) von dem selbstklebenden Gegenstand (1) abtrennbar sind.

17. Selbstklebender Gegenstand nach einem der vorstehenden Ansprüche, **dadurch gekennzeichnet, dass** er ferner eine Selbstklebemasse (5) umfasst.

18. Selbstklebender Gegenstand nach einem der vorstehenden Ansprüche, **dadurch gekennzeichnet, dass** der selbstklebende Gegenstand (1) ein Klebeband ist.

19. Selbstklebender Gegenstand nach einem der vorstehenden Ansprüche, **dadurch gekennzeichnet, dass** der selbstklebende Gegenstand (1) ein doppelseitiges Klebeband mit einem bandförmigen Träger (4) ist, wobei
- auf einer der beiden Oberseiten des bandförmigen Trägers (4) Dichtungsprofile (2) an den Längsrändern des Trägers (4) ausgebildet sind und sich zwischen den Dichtungsprofilen (2) die aushärtbare Klebmasse (3) befindet; und
- auf der anderen Oberseite des bandförmigen Trägers (4) eine Selbstklebemasse (5) aufgetragen ist.

20. Selbstklebender Gegenstand nach einem der vorstehenden Ansprüche, **dadurch gekennzeichnet, dass** der selbstklebende Gegenstand (1) ein doppelseitiges Klebeband mit einem bandförmigen Träger (4) ist, wobei
- auf einer der beiden Oberseiten des bandförmigen Trägers (4) Dichtungsprofile (2) an den Längsrändern des Trägers (4) ausgebildet sind und sich zwischen den Dichtungsprofilen (2) aushärtbare Klebmasse (3) befindet; und
- auf der anderen Oberseite des bandförmigen Trägers (4) ebenfalls Dichtungsprofile (2) an den Längsrändern des Trägers (4) ausgebildet sind und sich zwischen den Dichtungsprofile (2) aushärtbare Klebmasse (3) befindet.

21. Selbstklebender Gegenstand nach einem der Ansprüche 1 bis 17, **dadurch gekennzeichnet, dass** der selbstklebende Gegenstand ein Etikett (6) ist.

22. Selbstklebender Gegenstand nach Anspruch 21, **dadurch gekennzeichnet, dass** das Etikett eine Trägerschicht umfasst, wobei auf einer der beiden Oberseiten der Trägerschicht Dichtungsprofile an den Rändern des Etiketts ausgebildet sind und zwischen den Dichtungsprofilen die aushärtbare Klebmasse angeordnet ist.

23. Verwendung eines selbstklebenden Gegenstandes nach einem der Ansprüche 1 bis 22 im Fahrzeugbau, Flugzeugbau und/oder Modellbau.

24. Verwendung nach Anspruch 23 zum Verbinden von Automobil- oder Flugzeugteilen, insbesondere Karosserieteilen und/oder Glasscheiben.

25. Verfahren zur Herstellung eines selbstklebenden Gegenstandes nach einem der Ansprüche 1 bis 17, umfassend
(a) das Bereitstellen eines Trägers (4);
(b) das Ausbilden der Steuerungsmittel (2) an zumindest einer Seite des Trägers (4); und
(c) das Aufbringen der aushärtbaren Klebmasse (3) auf den Träger (4).

26. Verfahren nach Anspruch 25, **dadurch gekennzeichnet, dass** im Falle eines Klebebandes ein bandförmiger Träger (4) bereitgestellt wird; die Steuerungsmittel (2) als Dichtungsprofile an den Längsrändern des Trägers (4) ausgebildet werden, und die aushärtbare Klebmasse (3) zwischen den Steuerungsmitteln (2) auf den Träger (4) aufgebracht wird.

27. Verfahren nach Anspruch 25 oder Anspruch 26, **dadurch gekennzeichnet, dass** auf die Steuerungsmittel (2) das Material aufgebracht wird, das den Stoff, dessen Aufnahme aus der Umgebung zur Aushärtung der aushärtbaren Klebmasse (3) erforderlich ist, aufnehmen kann, so dass der Kontakt zwischen dem Stoff und der aushärtbaren Klebmasse (3) bis zum vorgegebenen Beginn des Aushärtungsprozesses verhindert wird.

28. Verfahren nach Anspruch 25 oder Anspruch 26, **dadurch gekennzeichnet, dass** auf die Steuerungsmittel (2) das Material aufgebracht wird, das den Stoff, dessen Abgabe an die Umgebung zur Aushärtung der aushärtbaren Klebmasse (3) erforderlich ist, an die aushärtbare Klebstoffmasse (3) abgibt, so dass die Konzentration des Stoffes in der aushärtbaren Klebmasse (3), die notwendig ist, um deren Aushärtung zu verhindern, bis zum vorgegebenen Beginn des Aushärtungsprozesses aufrechterhalten wird.
